Europäisches Patentamt

European Patent Office

Office européen des brevets

(11) Veröffentlichungsnummer: **0 479 400 A1**

# EUROPÄISCHE PATENTANMELDUNG

(21) Anmeldenummer: **91250264.8**

(51) Int. Cl.5: **B60J 5/04**, B60R 19/42

(22) Anmeldetag: **30.09.91**

(30) Priorität: **04.10.90 DE 4031678**

(43) Veröffentlichungstag der Anmeldung:
**08.04.92 Patentblatt 92/15**

(84) Benannte Vertragsstaaten:
**DE ES FR GB IT**

(71) Anmelder: **MANNESMANN Aktiengesellschaft**
**Mannesmannufer 2**
**W-4000 Düsseldorf 1(DE)**

(72) Erfinder: **Zichner, Roland, Dipl.-Ing.**
**Pfarrgasse 13**
**W-8722 Obereuerheim(DE)**
Erfinder: **Janssen, Manfred, Dr.-Ing.**
**Moerser Strasse 398**
**W-4150 Krefeld(DE)**
Erfinder: **Hoffmann, Ulrich, Dipl.-Ing.**
**Falkstrasse 97**
**W-4100 Duisburg(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) **Verstärkungselement für die Karosserie eines Automobils.**

(57) Die Erfindung betrifft ein Verstärkungselement für die Karosserie eines Automobils, insbesondere einer Fahrzeugtür eines Personenkraftwagens, bestehend aus einem langgestreckten spannbaren, elastischen Teil, das in einem in der Fahrzeugtür befestigten Hohlprofil angeordnet ist. Um eine verbessertes Verstärkungselement anzugeben, das für unterschiedliche Karosserieelemente verwendet werden kann und mit dem das Crash-Verhalten verbessert wird, wird vorgeschlagen, daß das elastische Teil in Form eines Steiles (1) sich durch das Hohlprofil /4) hindurcherstreckt und unabhängig davon an einem Karosserieelement befestigt ist.

Fig. 1

Die Erfindung betrifft ein Verstärkungselement für die Karosserie eines Automobils, insbesondere einer Fahrzeugtür eines Personenkraftwagens.

Im Zuge der Erhöhung der passiven Sicherheit im Automobilbau stellt sich die Aufgabe, an bestimmten Stellen der Karosserie, insbesondere der Fahrzeugtür eines Personenkraftwagens, Verstärkungselemente anzubringen, um das Crash-Verhalten zu verbessern.

Aus der DE-OS 36 06 024 ist ein Verstärkungselement für die Kraftfahrzeugtür bekannt geworden. Dieses Verstärkungselement ist als Trägerprofil aus Leichtmetall ausgebildet, das beidends in der Fahrzeugtür festgelegt ist. Dieses nahezu quadratische Profil ist für schmale Karosserieteile wie z.B. schmale Fahrzeugtüren mit geringer Einbautiefe nicht geeignet. Außerdem ist es nur wenig anpassungsfähig an stark unterschiedliche Fahrzeugtüren bzw. Karosserieteile.

Ein anderer Vorschlag für die Verstärkung der Kraftfahrzeugtür ist der DE 31 02 328 entnehmbar. Bei dieser Konstruktion ist in der Tür ein Träger aus Kunststoff angeordnet, in dem sich ein irreversibel dehnbares Seil erstreckt, das mit seinen Enden am gleichen Gelenkpunkt wie der Träger befestigt ist.

Aufgabe der Erfindung ist es, ein verbessertes Verstärkungselement anzugeben, das für unterschiedliche Karosserieelemente verwendet werden kann und mit dem das Crash-Verhalten verbessert wird.

Diese Aufgabe wird mit den im kennzeichnenden Teil angegebenen Merkmalen des Anspruches 1 gelöst. Vorteilhafte Weiterbildungen sind Bestandteil von Unteransprüchen.

Bei den bekannten Lösungen ist das Hauptaugenmerk bisher auf das plastische Verhalten des Verstärkungsmittels gelegt worden. Plastische Umformung ist aber immer auch mit einer entsprechenden Dehnung verbunden, was bedeutet, daß das beim Zusammenstoß sich verformende Karosserieteil unter Umständen weit in den Fahrgastraum eindringen und dort zu Verletzungen der Insassen führen kann. Demgegenüber wird erfindungsgemäß vorgeschlagen, ein an seinen Enden an der Karosserie befestigbares, langgestrecktes, elastisches und spannbares Teil anzuordnen. Vorzugsweise ist dies ein Seil oder Verbundseil aus z.B. Draht, Kunststoff oder Hanf, das an seinen Enden z.B. mittels Seilklemmen in der Karosserie befestigt wird. Zum Vorspannen des Seiles sind entsprechende Spannelemente wie z.B. ein Spannschloß vorgesehen.

Der Vorteil solcher Art von Verstärkungselementen ist darin zu sehen, daß sie nur wenig Platz in Anspruch nehmen und für jedes Karosserieteil in einfacher Weise anpaßbar sind. Außerdem weist ein solches Element auch nur ein geringes Gewicht auf, so daß die Gewichtzunahme bezogen auf das Gesamtgewicht des Fahrzeuges vernachlässigbar gering ist. Im Unterschied zu starren Verstärkungselementen bauen sich bei den erfindungsgemäß vorgeschlagenen elastischen Elementen keine zerstörerisch wirkenden Biegespannungen auf.

Erfindungsgemäß soll sich das Verstärkungselement durch das Hohlprofil hindurcherstrecken und unabhängig davon an der Karosserie befestigt werden. Der Vorteil dieser Anordnung ist darin zu sehen, daß der Crash-Ablauf in Stufen erfolgt. Zuerst wird das Hohlprofil plastisch verformt bis es an den elastischen Teil zur Anlage kommt und die weitere plastische Verformung bzw. das Einknicken des Hohlprofils wird durch das elastische Verstärkungselement stark behindert, wenn nicht sogar unterdrückt. In gleicher Weise wird weiterbildend vorgeschlagen das Seil aus mehreren Einzelseilelementen aus gleichen oder unterschiedlichen Werkstoffen zusammenzusetzen. Weitere Varianten sind die Länge und die Dicke der Einzelseilelemente. Die Wirkungsweise ist etwa vergleichbar wie vorher schon beschrieben, daß die Einzelseilelemente nicht alle zusammen auf einmal, sondern nacheinander zum Tragen kommen. Dadurch können große Verformungswege realisiert werden und das zu verstärkende Karosserieelement wird nicht überbeansprucht, da die jeweils kürzeren und/oder dünneren Seilelemente bei einer definierten Beanspruchung reißen.

Anhand einiger Ausführungsbeispiele wird das erfindungsgemäße Verstärkungselement näher erläutert. Es zeigen:

Fig. 1     eine Vorderansicht einer Anordnung des Verstärkungselementes,

Fig. 2     einen Querschnitt durch ein Strammerelement,

Fig. 3     wie Fig.2 , jedoch eine andere Ausführungsform,

Fig. 4     einen Querschnitt durch ein Verbundseil.

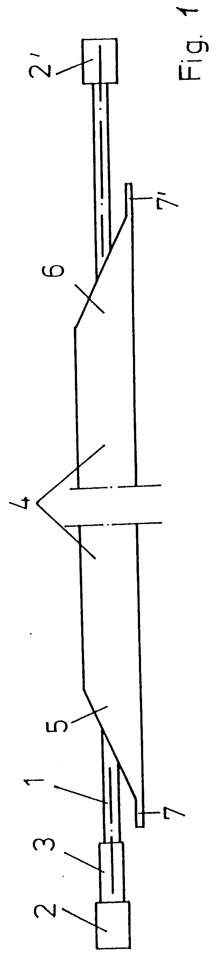

Figur 1 zeigt in einer Vorderansicht ein Ausführungsbeispiel des erfindungsgemäßen Verstärkungselementes. Es besteht beispielsweise aus einem in Seilklemmen 2, 2' verankerten Stahlseil 1 und einem Spannelement 3. Seilklemmen 2, 2' und Spannelement 3, z.B. als Spannschloß ausgebildet, sind nur skizzenhaft angedeutet und die Dicke des Stahlseiles 1 ist zur besseren Erkennung übertrieben dargestellt. Das Verstärkungselement ist in einem kastenartigen Hohlprofil 4 angeordnet, das an den Enden 5, 6 in bekannter Weise abgeschrägt ist, um es z.B. mit einer hier nicht dargestellten Fahrzeugtür zu verbinden. Zur Erleichterung der Montage sind die Endbereiche des Hohlprofiles 4 zu Lappen 7, 7' umgeformt. Der durch die Abschrägung erzeugte offene Bereich 5, 6 des Hohlprofiles 1 erleichtert die Anordnung des Verstärkungsmittels, so daß das gesamte Teil einbaufähig vormontiert werden kann.

Sowohl das Hohlprofil 4 als auch das Stahlseil 1 sind unabhängig voneinander an einem hier nicht dargestellten Karosserieelement z.B. eine Fahrzeugtür befestigt.

Der Vorteil dieser Anordnung ist darin zu sehen, daß zuerst das Hohlprofil 4 plastisch verformt wird, bevor es an dem vorgespannten Stahlseil 1 zur Anlage kommt. Die weitere Verformung wird durch die Elastizität des Stahlseiles 1 behindert.

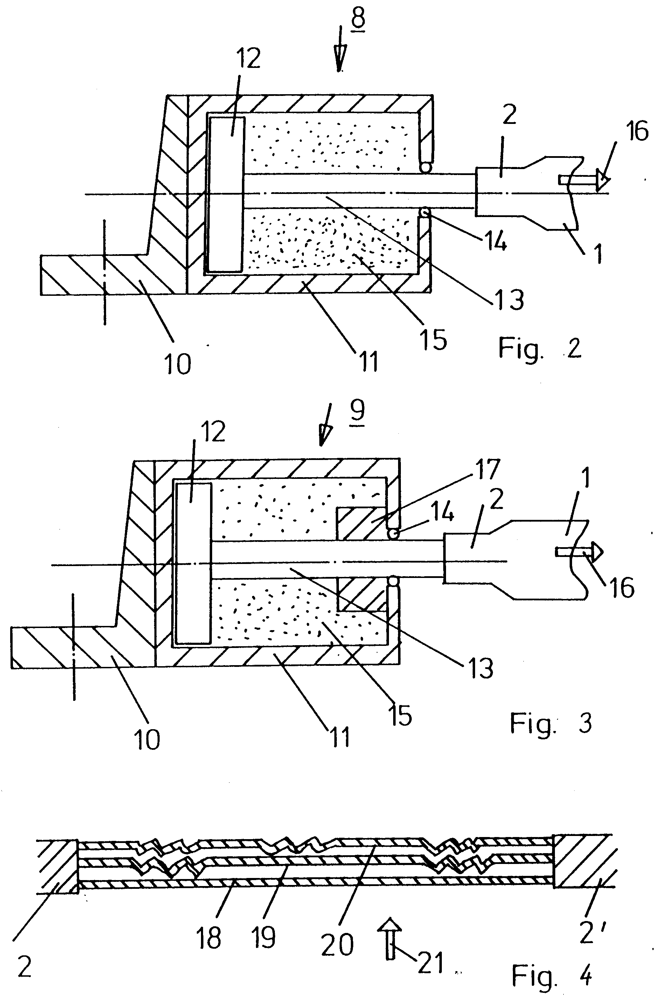

Figur2 und Figur3 zeigen jeweils in einem Querschnitt das mit einem Strammerelement 8, 9 verbundene Stahlseil 1 (hier nur angedeutet). Beide Strammerelemente 8, 9 werden anstelle des Spannschlosses 3 verwendet und bestehen aus einem Haltebock 10, einem Zylinder 11 und einem Kolben 12 mit Kolbenstange 13, die abgedichtet 14 nach außen geführt und mit der Seilklemme 2 verbunden ist. Der Zylinderraum ist mit einem Fluid 15 (Flüssigkeit oder Gas) gefüllt. Im Falle eines Aufpralls verschiebt sich das Drahtseil 1 nach rechts, hier angedeutet durch den Pfeil 16 und der Kolben 12 wird über die Kolbenstange 13 mitbewegt. Bei der Verdrängung des Fluids 15 wird Arbeit geleistet und damit Aufprallenergie vernichtet.

Das in Figur3 gezeigte Ausführungsbeispiel weist als weitere Variante noch eine im Zylinderraum angeordnete Gaspatrone 17 auf. Diese wird bei der Bewegung des Drahtseiles 1 geöffnet, so daß sich das gespeicherte Gas entspannen kann. Dadurch wird der Effekt der Vernichtung von Aufprallenergie mittels Kolbenarbeit verstärkt.

Figur4 zeigt in einem Querschnitt schematisch ein erfindungsgemäßes Verbundseil. Es besteht aus mehreren Seilelementen 18, 19, 20, die hinsichtlich ihres Werkstoffes, ihrer Länge und ihrer Dicke unterschiedlich sein können. Die auf das Verbundseil wirkende Aufprallenergie ist durch den Pfeil 21 gekennzeichnet. Danach würde das erste Seilelement 18 unter Belastung zuerst reißen und das zweite Seilelement 19 sich straffen und diese Prozedur sich fortsetzen.

Der Vorteil dieser Verfahrensweise ist darin zu sehen, daß die Aufprallenergie stufenweise vernichtet wird und damit das zu schützende Karosserieteil bzw. die Befestigungspunkte für das Verstärkungsmittel nicht schlagartig mit dem Maximalwert belastet werden.

## Patentansprüche

1. Verstärkungselement für die Karosserie eines Automobils, insbesondere einer Fahrzeugtür eines Personenkraftwagens, bestehend aus einem langgestreckten spannbaren, elastischen Teil, das in einem in der Fahrzeugtür befestigten Hohlprofil angeordnet ist,
**dadurch gekennzeichnet,**
daß das elastische Teil in Form eines Seiles (1) sich durch das Hohlprofil (4) hindurcherstreckt und unabhängig davon an einem Karosserieelement befestigt ist.

2. Verstärkungselement nach Anspruch 1,
**dadurch gekennzeichnet,**
daß das Seil (1) aus mehreren Einzelseilelementen (18, 19, 20) aus dem gleichen oder aus unterschiedlichen Werkstoffen besteht.

3. Verstärkungselement nach Anspruch 2,
**dadurch gekennzeichnet,**
daß die Einzelseilelemente (18, 19, 20) eine unterschiedliche Länge aufweisen.

4. Verstärkungselement nach den Ansprüchen 2 und 3,
**dadurch gekennzeichnet,**
daß die Einzelseilelemente (18, 19, 20) eine unterschiedliche Dicke aufweisen.

5. Verstärkungselement nach den Ansprüchen 1 bis 4,
**dadurch gekennzeichnet**,
daß am Seil (1) ein Spannelement (3) angeordnet ist.

6. Verstärkungselement nach den Ansprüchen 1 bis 5,
**dadurch gekennzeichnet,**
daß mindestens ein Ende des Seiles (1) mit einem Strammerelement (8, 9) verbunden ist.

7. Verstärkungselement nach Anspruch 6,
**dadurch gekennzeichnet**,
daß das Strammerelement (9) eine Gaspatrone (17) aufweist.

Fig. 1

Fig. 2

Fig. 3

Fig. 4

# EUROPÄISCHER RECHERCHENBERICHT

## EINSCHLÄGIGE DOKUMENTE

**EP 91250264.8**

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A - 1 959 989</u><br>(FORD-WERKE AG)<br>* Gesamt *<br>-- | 1 | B 60 J 5/04<br>B 60 R 19/42 |
| A | <u>DE - A - 2 006 498</u><br>(ADAM OPEL AG)<br>* Gesamt *<br>-- | 1 | |
| D,A | <u>DE - A - 3 102 328</u><br>(MESSERSCHMITT-BÖLKOW-BLOHM GMBH)<br>* Gesamt *<br>-- | 1 | |
| D,A | <u>DE - A - 3 606 024</u><br>(ALUMINIUM WALZWERKE SINGEN GMBH)<br>* Gesamt *<br>---- | 1 | |

**RECHERCHIERTE SACHGEBIETE (Int. Cl.⁵)**

B 60 J
B 60 R
B 62 D

Der vorliegende Recherchenbericht wurde für alle Patentansprüche erstellt.

| Recherchenort | Abschlußdatum der Recherche | Prüfer |
|---|---|---|
| WIEN | 26-11-1991 | SCHMICKL |